# EUROPÄISCHE PATENTSCHRIFT

(11) **EP 0 530 719 B1**
(45) Veröffentlichungstag und Bekanntmachung des Hinweises auf die Patenterteilung: **06.11.1996**
(21) Anmeldenummer: 92114794.8
(22) Anmeldetag: 28.08.1992
(51) Int. Cl.: B60R 11/02, H04M 1/72

(54) **Fahrzeughalterung für ein Handportable**
Support for a portable telephone in a vehicle
Support pour un téléphone portatif dans un véhicule

(30) Priorität: 05.09.1991 DE 4129544
(43) Veröffentlichungstag der Anmeldung: 10.03.1993
(73) Patentinhaber: SIEMENS AKTIENGESELLSCHAFT, 80333 München (DE)
(72) Erfinder: Heiss, Reihold, Dipl.-Ing. (FH), W-8027 Neuried (DE)

(56) Entgegenhaltungen:
- EP-A- 0 372 965
- EP-A- 0 389 737
- GB-A- 2 206 765
- MOTOROLA TECHNICAL DEVELOPMENTS Bd. 8, Nr. 1, 30. Oktober 1988, SCHAUMBURG,ILLINOIS Seite 73 , XP110890 KAI SIWIAK , LEON JASINSKI 'ACCESSORY ADAPTER AND SECURITY CRADLE FOR PORTABLE RADIOS'

## Beschreibung

Die Erfindung bezieht sich auf ein tragbares Fernsprechgerät mit einer Halterung zur Ablage in einem Fahrzeug, das mit einer an der stufenförmig abgesetzten Unterseite angeordneten Aufnahme für einen Akkupack bei mobiler Handhabung versehen ist, in die nach Entfernen des Akkupack ein in Größe und Form dem Akkupack angepaßtes, im Innenraum des Fahrzeuges befestigtes und mit elektrischen Anschlüssen für das tragbare Fernsprechgerät im Fahrzeug versehenes Halteelement eingreift, und an dessen hinterer abgestufter Stirnseite Kontaktierungselemente angeordnet sind zur elektrischen Verbindung mit dem Akkupack.

Für eine günstige Handhabung des Fernsprechgerätes im Fahrzeug ist eine gut zugängliche Anordnung erforderlich. Eine Fahrzeughalterung sollte möglichst wenig Platz beanspruchen, um den vorhandenen, sehr begrenzten Einbauplatz im Innenraum des Fahrzeugs optimal zu nutzen. Großvolumige Gerätehalterungen lassen sich nur schwer im Innenraum des Fahrzeugs integrieren. Auch bei den vorhandenen, meist zweiteiligen Halterungen mit einer mechanischen Halterung und einer Anschlußbox für die Steuerelektronik weist die z.B. aus einem Magnethalter bestehende mechanische Halterung wegen der Forderungen der VDA-Vorschriften ein großes Volumen auf.

Ein tragbares Fernsprechgerät der einleitend beschriebenen Art ist aus der GB 2 206 765 A bekannt. Für die Benutzung im Fahrzeug sind eine Reihe von elektrischen Verbindungselementen vorgesehen; die Halterung erfolgt über ein Halteelement, auf das das portable Fernsprechgerät aufgelegt und über Vorrichtungen zur Positionierung und Fixierung mit diesem verbunden ist.

Der Erfindung liegt die Aufgabe zugrunde, für ein tragbares Fernsprechgerät eine möglichst platzsparende, in ihrem Aufbau einfache Halterung im Fahrzeug zu schaffen.

Diese Aufgabe wird gemäß der Erfindung in der Weise gelöst, daß die elektrischen Anschlüsse so im Halteelement angeordnet sind, daß sie mit den Kontaktierungselementen des tragbaren Fernsprechgerätes bei dessen Einschieben auf das Halteelement in eine elektrische Verbindung treten, daß an der vorderen Stirnseite des tragbaren Fernsprechgerätes eine Verriegelungstaste zur Arretierung des Akkupack bzw. des Fernsprechgerätes in der Halterung vorgesehen ist, und daß Akkupack bzw. Halteelement über seitliche Führungen in die Aufnahme des Fernsprechgerätes einschiebbar sind.

Vorteilhafte Ausgestaltungen und Weiterbildungen des Erfindungsgegenstandes sind in den Unteransprüchen angegeben.

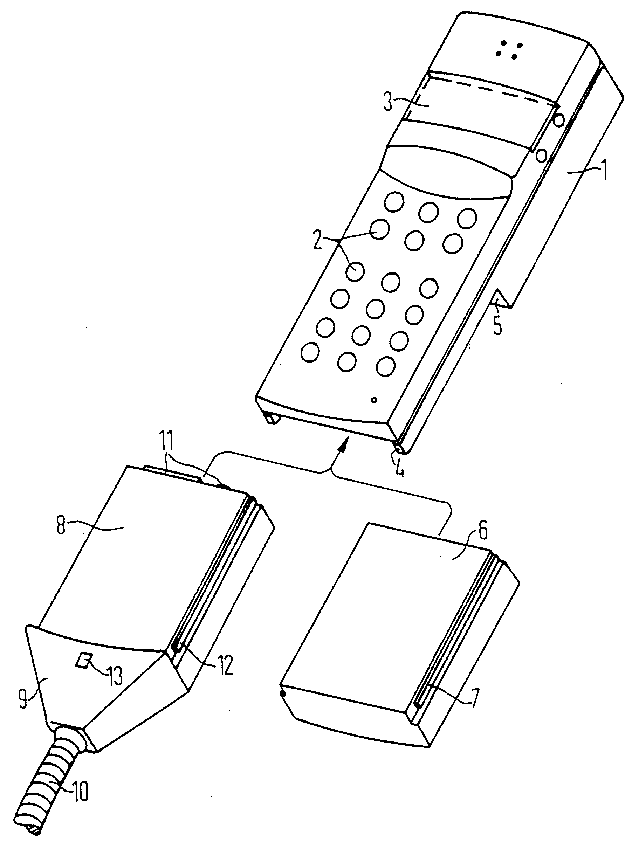

Nachstehend wird die Erfindung anhand eines in der Zeichnung dargestellten Ausführungsbeispiels näher erläutert.

Das tragbare Fernsprechgerät 1, an dessen Oberseite ein Tastenfeld 2 und ein Display 2 angeordnet sind, ist an seiner Unterseite stufenförmig abgesetzt derart, daß der vordere, die Tastatur enthaltende Teil flacher ausgebildet ist als der übrige Teil. An diesem flacheren Teil sind an der Unterseite seitliche Führungen 4 vorgesehen zur Aufnahme eines Akkupacks 6, das zur Stromversorgung des Fernsprechgerätes bei Betrieb außerhalb des Fahrzeugs dient. Zum Einschieben des Akkupacks 6 in die Führungsschiene 4 (Halterung) des Fernsprechgerätes 1 sind am Akkupack 6 an den oberen Kanten in Längsrichtung verlaufende Leisten 7 vorgesehen.

In Größe und Form dem Akkupack 6 angepaßt ist ein Halteelement 8 ausgebildet, das in der Zeichnung neben dem Akkupack 6 liegend dargestellt ist. Das Halteelement 8 wird an einer geeigneten Innenraumfläche des Fahrzeugs angebracht oder ist, wie in der Zeichnung dargestellt, mit einem Schwanenhals 10 versehen, der über ein konisches Verbindungsstück 9, das auch Bestandteil der Halterung 8 sein kann, mit dieser verbunden ist. Die Führungs- und Befestigungselemente 7 des Akkupack 6 sind analog auf die Halterung 8 übertragen, an dem entsprechende Leisten 12 angebracht sind. Das Fernsprechgerät 1 wird nach Herausnahme des Akkupacks 6 auf die Halterung 8 aufgesetzt. Dies ergibt einen sehr platzsparenden Aufbau, da die Halterung keinen zusätzlichen Raum benötigt, indem sie nämlich einen Teil des Fernsprechgerätes bildet, der bei dessen Benutzung außerhalb des Fahrzeugs für den Akkupack zur Stromversorgung des Gerätes genutzt wird. Auf der Oberseite des Verbindungsstücks 9 ist eine Leuchtdiode 13 angebracht zur Kontrolle des gesteckten Gerätes 1.

Kontaktierungselemente (Koax/NF-Stecker) für die elektrische Verbindung zur Halterung und zur Außenantenne befinden sich geschützt auf einer Innenfläche des Fernsprechgerätes, nämlich der Stirnseite 5 der stufenförmig abgesetzten Unterseite. Diese in der Zeichnung nicht dargestellten Kontaktierungselemente sind von außen nicht sichtbar und gut geschützt gegen Beschädigungen. In entsprechender räumlicher Zuordnung zu diesen Kontaktierungselementen des Fernsprechgerätes 1 sind die Steckverbinder 11 (Koax/NF-Stecker) an der Stirnseite der Halterung 8 angebracht und gelangen somit bei auf die Halterung 8 aufgesetztem Fernsprechgerät 1 mit den entsprechenden Kontaktierungselementen des Fernsprechgerätes in Eingriff. Die Kontaktierungselemente werden zugleich als elektrische Verbindung zwischen dem Akkupack 6 und Baugruppen im Fernsprechgerät genutzt. Das Volumen der Halterung 8 kann zur Aufnahme von Elektronikbauteilen genutzt werden. Im Sichtbereich der Bedienperson können auf der Halterung Anzeigeelemente für Benutzerhinweise angebracht werden. Zur Arretierung von Akkupack 6 bzw. Halterung 8 und Fernsprechgerät 1 kann eine, in der Zeichnung nicht dargestellte Verriegelungstaste vorgesehen werden.

## Patentansprüche

1. Tragbares Fernsprechgerät mit einer Halterung zur Ablage in einem Fahrzeug, das mit einer an der stufenförmig abgesetzten Unterseite angeordneten Aufnahme für einen Akkupack (6) bei mobiler Handhabung versehen ist, in die nach Entfernen des Akkupack (6) ein in Größe und Form dem Akkupack (6) angepaßtes, im Innenraum des Fahrzeuges befestigtes und mit elektrischen Anschlüssen für das tragbare Fernsprechgerät im Fahrzeug versehenes Halteelement (8) eingreift, und an dessen hinterer abgestufter Stirnseite Kontaktierungselemente angeordnet sind zur elektrischen Verbindung mit dem Akkupack dadurch **gekennzeichnet,** daß die elektrischen Anschlüsse so im Halteelement (8) angeordnet sind, daß sie mit den Kontaktierungselementen des tragbaren Fernsprechgerätes bei dessen Einschieben auf das Halteelement (8) in eine elektrische Verbindung treten, daß an der vorderen Stirnseite des tragbaren Fernsprechgerätes (1) eine Verriegelungstaste zur Arretierung des Akkupack (6) bzw. des Fernsprechgerätes(1) in der Halterung (4) vorgesehen ist, und daß Akkupack (6) bzw. Halteelement (8) über seitliche Führungen (7, 12) in die Aufnahme des Fernsprechgerätes (1) einschiebbar sind.

2. Tragbares Fernsprechgerät nach Anspruch 1, dadurch **gekennzeichnet,** daß das Halteelement (8) an einem Schwanenhals (10) angebracht ist.

3. Tragbares Fernsprechgerät nach Anspruch 1 oder 2, dadurch **gekennzeichnet,** daß der Innenraum des Halteelements (8) für Elektronikbauteile genutzt ist.

## Claims

1. Portable telephone with a support for storage in a vehicle, which telephone is provided with a receptacle, arranged on the underside which is offset in a step-shape, for a battery pack (6) for mobile handling, into which receptacle a securing element (8), which is adapted in shape and size to the battery pack (6) and which is mounted in the interior of the vehicle and is provided within the vehicle with electrical terminals for the portable telephone, engages once the battery pack has been removed, and on the rear of which telephone stepped end side contact elements are arranged for electrical connection with the battery pack, characterized in that the electrical terminals are arranged in the securing element (8) in such a way that they make an electrical connection with the contacting elements of the portable telephone when it is pushed onto the securing element (8), in that a locking key for locking the battery pack (6) or the telephone (1) in the support (4) is provided on the front end side of the portable telephone (1), and in that the battery pack (6) and securing element (8), respectively, can be pushed into the receptacle of the telephone (1) by means of lateral guides (7, 12).

2. Portable telephone according to Claim 1, characterized in that the securing element (8) is provided on a swan neck (10).

3. Portable telephone according to Claim 1 or 2, characterized in that the interior of the securing element (8) is used for electronic components.

## Revendications

1. Téléphone portatif qui comporte une fixation pour mettre le téléphone portatif dans un véhicule, qui est muni, pour une manipulation mobile, d'une partie de réception d'une batterie (6) d'accumulateurs, qui se trouve sur la face inférieure en retrait et en gradins, dans laquelle s'engage, après le retrait de la batterie (6) d'accumulateurs, un élément de support, dont la taille et la forme sont adaptées à la batterie (6) d'accumulateurs, qui est fixé à l'intérieur du véhicule et qui est équipé de raccordements électriques pour le téléphone portatif dans le véhicule, et sur la face frontale arrière en gradins de laquelle sont disposés des éléments de contact destinés à la liaison électrique avec la batterie d'accumulateurs, **caractérisé par le fait que** les raccordements électriques sont disposés dans l'élément de support (8) de telle sorte qu'ils établissent une liaison électrique avec les éléments de contact du téléphone portatif lors de l'insertion de ce dernier sur l'élément de support (8), une touche de verrouillage est prévue sur la face frontale avant du téléphone (1), laquelle touche est destinée à bloquer la batterie (6) d'accumulateurs ou le téléphone portatif (1) dans la fixation (4), et que la batterie (6) d'accumulateurs ou l'élément de support (8) peut être inséré dans la partie de réception du téléphone (1) par l'intermédiaire de glissières latérales (7, 12).

2. Téléphone portatif selon la revendication 1, **caractérisé par le fait que** l'élément de support (8) est mis sur un col de cygne (10).

3. Téléphone portatif selon la revendication 1 ou 2, **caractérisé par le fait que** l'intérieur de l'élément de support (8) peut être utilisé pour des composants électroniques.
